# FASCICULE DE BREVET EUROPEEN

(11) **EP 2 392 480 B1**
(45) Date de publication et mention de la délivrance du brevet: **06.08.2014**
(21) Numéro de dépôt: 11004287.6
(22) Date de dépôt: 25.05.2011
(51) Int. Cl.: B60C 23/04

(54) **Dispositif de bridage d'un boitier de capteur de pression et température sur une jante de véhicule et boitier adapté**
Befestigungsvorrichtung eines Druck- und Temperatursensorsmodulgehäuses zur Befestigung auf der Felge eines Fahrzeuges, und entsprechendes Gehäuse dafür
Fastening device of the housing of a pressure and temperature sensor module for mounting on the rim of a vehicle, and the housing

(30) Priorité: 04.06.2010 FR 1054426
(43) Date de publication de la demande: 07.12.2011
(73) Titulaire: LDL Technology, 31520 Ramonville Saint Agne (FR)
(72) Inventeur: Luce, Dominique, 31520 Ramonville Saint Agné (FR)
(74) Mandataire: Richebourg, Michel François

(56) Documents cités:
- US-A- 4 507 956
- US-A1- 2004 118 195

## Description

### DOMAINE D'APPLICATION DE L'INVENTION

La présente invention a trait au domaine des systèmes de surveillance de la pression et de la température des pneumatiques de véhicule et notamment aux adaptations permettant de fixer à la jante, le boîtier électronique de mesure contenant le capteur.

### DESCRIPTION DE L'ART ANTÉRIEUR

Une des solutions actuelles de bridage consiste à utiliser un cerclage fixant le boîtier électronique en passant par dessous le boîtier ou par des fenêtres aménagées dans ce dernier afin de passer la sangle et de la refermer sur le pourtour de la jante. Une telle solution présente l'inconvénient de voir, lors des phases de montage et de démontage du pneumatique sur la jante, les flancs du pneumatique venir s'appliquer sur le boîtier. Tel le document US 4,507,956 en accord avec les préambules respectifs des revendications 1 et 7.

La soumission de telles contraintes au boîtier peut avoir pour conséquences telles que :
- l'arrachement du cerclage,
- l'endommagement du boîtier,
- l'endommagement de la paroi interne du pneumatique lors de cet arrachement,
- l'apparition d'hernies dans les parties endommagées,
- etc...

Il a été par exemple constaté lors du montage de pneumatique de poids lourds qu'un boîtier de capteur fixé à la jante avec une sangle ou cerclage en acier inoxydable de section plate (12 par 1,2 mm) ne peut subir un déplacement axial parallèle à l'axe de la roue de plus de 40 mm. En effet, cette course correspond à la limite plastique de déformation de la sangle. Aussi, une fois ce déplacement atteint lors des phases de montage ou de démontage, la déformation de la sangle a pour conséquence :
- que le boîtier n'est plus plaqué contre la jante et tourne librement ou, plus couramment
- que la sangle se casse.

Un tel déplacement est largement possible du fait que la partie centrale de la jante atteignent couramment 80 mm.

Bien que les problèmes techniques cités ci-dessus n'y soient pas relevés, on retrouve cette configuration dans le document US 2004/0118195 qui décrit un appareil pour surveiller les paramètres d'un pneumatique monté sur une roue de véhicule comprenant un capteur configuré pour une installation à l'intérieur du pneumatique. Le capteur est fixé à la jante de la roue afin d 'éviter que ce dernier ne soit exposé au liquide présent dans ledit pneumatique. Selon un mode de réalisation, le capteur est fixé à la roue au moyen de deux sangles ou cerclages qui s'étendent autour d'une surface circonférentielle de la jante et qui s'associent à un socle couplé audit capteur.

En effet, le fait que le capteur ou que le boîtier contenant le capteur soit associé à un socle augmente la hauteur de l'ensemble et donc de l'obstacle qu'il constitue lors des phases de montage ou de démontage.

De plus, les volumes du socle et du boîtier assemblés adoptent une forme périphérique concave qui devient une zone de retenue du talon du pneumatique, retenue qui va se solder par la rupture soit de la liaison entre le socle et le boîtier soit du ou des cerclages comme décrit plus haut.

L'utilisation de cerclages a de plus non seulement l'inconvénient de ne pas constituer la solution la plus résistante mais également de ne pas pouvoir s'adapter à des profils coniques de jante. En effet, par définition une bande présente un même diamètre sur ses deux rebords n'autorisant donc pas son adaptation à une variation de diamètre.

Il existe également le dispositif décrit dans le document US 4507956 qui propose de relier un module électronique à une jante au moyen de câbles qui sont aux extrémités d'un ressort. La présence d'un ressort rend la fixation plus complexe et plus onéreuse.

### DESCRIPTION DE L'INVENTION

Partant de cet état de fait, la demanderesse a mené des recherches visant à solutionner ce problème d'arrachement du moyen de fixation du boîtier électronique.

Ces recherches ont abouti à la conception et a la réalisation d'un dispositif de fixation pour boîtier électronique particulièrement judicieux permettant d'obvier aux inconvénients de l'art antérieur tout en diminuant les coûts d'un tel dispositif. L'invention concerne également le boîtier électronique contenant le capteur qui est adapté à un tel dispositif de fixation.

Selon l'invention, le dispositif de bridage sur jante d'un boîtier électronique de mesure de la pression et/ou de la température à l'intérieur d'un pneumatique est constitué par au moins un câble qui, faisant au moins un tour autour de la jante et venant plaquer le boîtier sur la surface de la jante, forme une liaison élastique autorisant un déplacement axial du boîtier sur la jante évitant ainsi au dit boîtier de supporter la contrainte du pneumatique lors des phases montage et de démontage.

L'utilisation d'un câble permet de réunir à la fois la fonction d'un maintien en position sur la jante et celle de permettre audit boîtier d'adopter un comportement d'évitement en regard des contraintes exercées par les flancs du pneumatique lors des phases de montage et de démontage. En effet, en intercalant le boîtier entre la boucle formée par le câble et la surface de la jante, la fixation proposée par mise en tension du câble permet un maintien en position optimisé.

En proposant un plaquage du boîtier par un câble, ledit boitier va pouvoir se déplacer par glissement rotatif autour de l'axe de la roue sur la surface de la jante afin que s'il se retrouve en contact avec le flanc du pneumatique, la contrainte créée par ce dernier tende à faire glisser le boîtier sur la jante le long du câble afin d'éviter tout endommagement du boîtier, de son câble de fixation, ou du pneumatique. Le boîtier peut glisser le long du câble ou tourner avec le câble.

L'utilisation d'un câble garantit une résistance améliorée au risque de rupture auquel il est soumis lorsque le boîtier qu'il retient est soumis à la pression exercée par les joues du pneumatique lors des phases de montage et de démontage. Les cerclages de l'art antérieur qui sont, de par leur nature, des bandes de fixation plates ou du moins de profil rectangulaire sont beaucoup plus fragiles qu'un câble.

L'utilisation d'un câble qui présente un profil sensiblement circulaire, a pour avantage de ne réaliser qu'un contact tangentiel avec la surface de la jante. Cette surface de contact réduite en regard de celle proposée par une sangle, facilite le déplacement axial du câble et donc du boîtier.

Un autre effet technique proposé par la solution de l'utilisation d'un câble comme moyen de fixation du boîtier sur la jante, concerne l'élasticité intrinsèque du câble qui, de par son matériau, le nombre de fils qui le compose et leur torsion, autorise un pourcentage d'extension élastique. Cette possibilité d'extension autorise le boîtier à se déplacer par glissement axialement sur la surface de la jante jusqu'à ce qu'il vienne s'adosser à une projection radiale de la jante de sorte que si le flanc du pneumatique est toujours en contact avec le boîtier après le déplacement, ce ne soit plus le boîtier et le câble qui prennent en compte les contraintes mais la jante. Une élasticité équivalente ne peut être obtenue par une bande de matériau plein de type sangle. Ainsi, par exemple les essais de la demanderesse ont fait apparaître qu'un cerclage en acier inoxydable d'épaisseur 1,2 mm présentait un pourcentage d'élongation dans le domaine élastique et linéaire de 2,3 % alors qu'un câble également en inox de diamètre 1,5 mm présentait quant à lui un pourcentage de 4,4%.

Un autre avantage à une telle solution réside bien entendu dans son faible coût ainsi que dans sa facilité de mise en oeuvre.

Selon une autre caractéristique, ledit câble fait deux tours autour de la jante et vient s'associer aux deux bords longitudinaux du boîtier. En addition d'une meilleure répartition du serrage exercé par le câble sur le boîtier contre la jante, l'utilisation d'un seul câble sur deux cotés du boîtier est particulièrement avantageuse en ce que lorsque l'action axiale du flanc du pneumatique sur le côté du boîtier a pour effet de plaquer ledit boîtier contre une branche du U formé par le profil de la jante, l'éventuel soulèvement d'un côté du boîtier aura pour effet, un serrage plus important de l'autre boucle du câble garantissant son maintien en position entre les branches du u (drop center) formé par le profil de jante. Un tel effet technique est autorisé par le fait que, selon une autre caractéristique particulièrement avantageuse de l'invention, la ou les boucles du câble viennent prendre appui sur la partie supérieure dudit boîtier.

Que ce soit au moyen d'une ou plusieurs boucles, un autre avantage, du dispositif est de s'adapter au profil (drop center) des jantes qu'il soit cylindrique comme souvent pour les jantes en acier ou conique comme souvent pour les jantes en aluminium. En effet, l'élasticité et la mise en tension du câble permet d'ajuster exactement le diamètre de boucle au diamètre du profil de jante. Cette adaptation constitue un net progrès en regard des fixations par cerclage ou par sangle(s) de l'art antérieur qui requièrent un profil de jante avec une portion cylindrique correspondant au moins à la largeur du cerclage.

Selon une autre caractéristique, ledit câble est mis sous tension lors de son installation. En fait, l'installation dudit dispositif de bridage d'un boîtier de capteur de pression et de température sur une jante de véhicule est remarquable en ce qu'elle consiste à utiliser un câble en acier venant faire le tour de la jante afin de plaquer ledit boîtier sur la jante et à sélectionner les caractéristiques du câble et la valeur de sa mise en tension lors de son installation de façon à ce qu'il puisse se déformer de façon élastique lors du déplacement du boîtier, déplacement ayant lieu lors des phases de montage et de démontage par contact des joues du pneumatique sur ledit boîtier.

Selon une autre caractéristique particulièrement avantageuse de l'invention, le dispositif comporte un module de liaison qui assure la fixation du boîtier sur le câble et la liaison des deux extrémités du câble.

Selon une autre caractéristique particulièrement avantageuse de l'invention, le dispositif comporte un module de liaison qui assure la fixation du boîtier sur le câble, fixation aménagée pour tendre vers une rupture libérant le glissement du boîtier sur le câble à partir d'un certain seuil de contrainte.

Une telle fixation garantit le déplacement du boîtier sous le câble en cas de forte contrainte. Cette rupture volontaire ne remet pas en cause le plaquage exercé par le câble mais rend aléatoire la position du boîtier par rapport audit câble. Selon un mode de réalisation, ledit module de liaison vient prendre appui sur une projection issue du boîtier, projection de section volontairement affaiblie ou réalisée dans un matériau fusible susceptible de se casser à partir d'un certain seuil de contrainte.

L'invention concerne également le boîtier électronique qui est adapté au dispositif de bridage ci-dessus décrit c'est à dire à une fixation par câble. Pour ce faire le corps du boîtier qui épouse la forme de la jante est ménagé de deux rainures dans lesquelles s'enfilent la ou les boucles du câble. En alternative ou en complément à ces rainures, des canaux préformés dans le boîtier peuvent proposer la même fonction.

L'invention concerne également un boîtier remarquable en ce qu'il comprend sur sa surface extérieure, une forme concave d'accueil dudit module de liaison d'où se projette une saillie radiale sur laquelle vient s'appuyer ledit module de liaison et qui est susceptible de casser en cas de forte contrainte exercée sur le boîtier.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif de fixation conforme à l'invention.

### BRÈVE DESCRIPTION DES DESSINS

La figure 1 est un dessin schématique d'une vue partielle en perspective extérieure d'un montage d'un boîtier sur une jante avec un mode de réalisation d'un dispositif conforme à l'invention,
La figure 2 est une vue partielle de dessus dudit montage,
La figure 3 est une vue partielle de côté dudit montage,
La figure 4 est une vue de détail en perspective extérieure du module de liaison du câble au boîtier,
La figure 5 est un dessin schématique d'une vue de côté d'un montage dudit boîtier sur une jante à profil conique.

### DESCRIPTION DES MODES DE RÉALISATION PRÉFÉRÉS

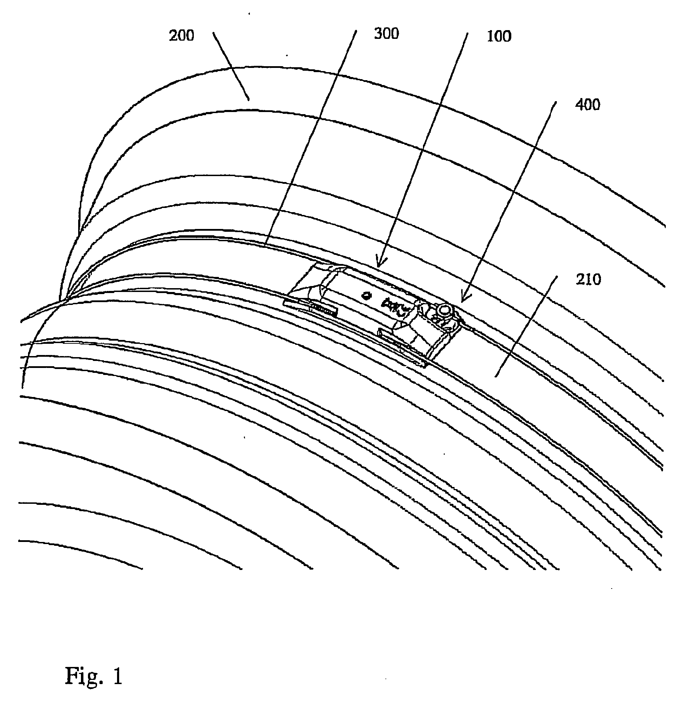

Tel qu'illustré sur le dessin des figures 1 à 4, le boîtier 100 contenant les différents sous-ensembles participant à la mesure et à la transmission des grandeurs telles la température et la pression à l'intérieur du pneumatique (non illustré) est plaqué contre la surface cylindrique de la jante 200 au moyen d'un câble 300.

Selon un mode de réalisation préféré mais non limitatif, ledit câble se compose d'une pluralité de fils torsadés en acier inoxydable et présente un diamètre de 1,5 mm.

Pour ce faire, le boîtier 100 adopte une forme ou est suffisamment souple pour épouser la surface cylindrique 210 de la jante 200.

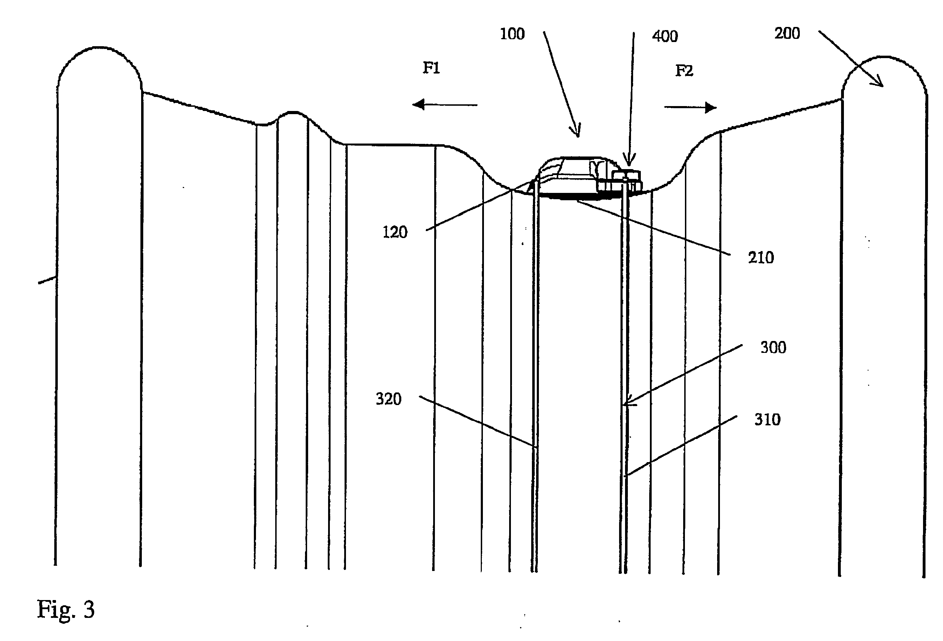

Comme illustré, sur le dessin de la figure 3, le profil de la jante 200 dit "drop center" constitue un U évasé au fond duquel (surface cylindrique 210) est disposé ledit boîtier 100.

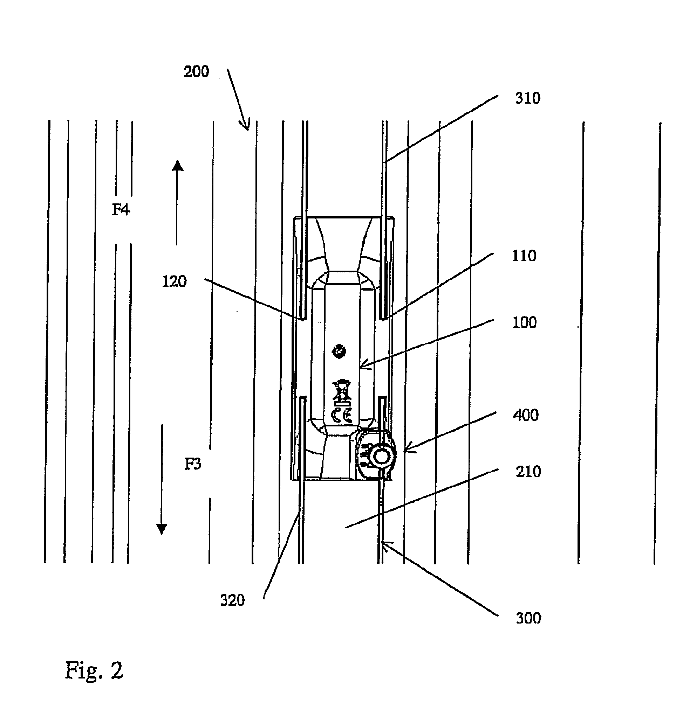

En venant ceinturer le boîtier sur la jante, le câble 300 assure le plaquage du boîtier 100 dans le fond du U en venant former deux boucles 310 et 320 autour de la jante 200 qui viennent s'appuyer sur les bords latéraux du boîtier 100 comme illustré sur le dessin de la figure 2.

Pour ce faire, ledit boîtier 100 comprend, sur la face supérieure, deux canaux latéraux longitudinaux 110 et 120 dans lesquels s'enfilent les deux boucles 310 et 320. Selon le mode de réalisation illustré, ces canaux 110 et 120 se prolongent à leur deux extrémités par deux rainures également ménagées dans le boîtier.

L'association de ces canaux 110 et 120 et de ces rainures préformés dans le boîtier garantissent sa liaison avec le câble 300.

La taille des canaux et des rainures ainsi que le matériau du boîtier 100 autorisent le glissement du câble 300 à des fins de mise en place mais aussi pour permettre le déplacement d'évitement décrit plus bas.

L'élasticité du câble 300 qui, selon un mode de réalisation préféré, avoisine les 4,4 % va permettre au flanc du pneumatique d'emporter axialement le boîtier 100 et de le faire se déplacer selon la flèche F1 ou F2 (cf. figure 3) sur la surface cylindrique 210 de la jante 200. Une fois les bords du profil en U atteints, c'est la jante 200 qui va contrer les efforts transmis par les flancs du pneumatique.

Le boîtier 100 présente une longueur négligeable par rapport à la zone de transmission d'effort ce qui va l'inciter à :
- sortir de la zone de stress et glisser sous le pneumatique (sous le plus petit diamètre du flanc de pneumatique) en reprenant sa position initiale,
- et/ou à glisser le long du câble 300 selon la surface cylindrique 210 selon les flèches F3 ou F4 comme illustré sur le dessin de la figure 2.

Ainsi, le boîtier 100 et son dispositif de fixation à la jante 200 ne luttent pas contre les efforts du pneumatique mais utilisent ces efforts pour déplacer le boîtier du capteur grâce à l'élasticité du câble 300 et/ou grâce aux possibilités de glissement soit du boîtier 100 le long de ses câbles de fixation soit du boîtier 100 et du câble 300 autour de la jante 200.

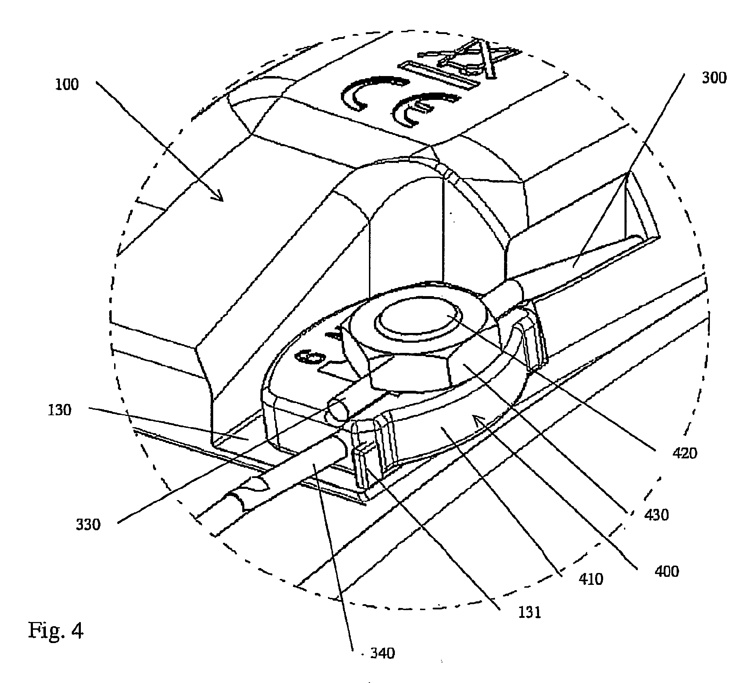

Comme illustré sur le dessin de la figure 4, un module de liaison 400 assure le maintien en position du boîtier 100 sur le câble 300. Ce module de liaison comprend un corps 410 accueillant une tige filetée 420 sur laquelle se visse un écrou 430. Selon un mode de réalisation non illustrée, ladite tige filetée 420 est percée transversalement de façon à autoriser l'enfilage de l'extrémité du câble 300 et permettre son serrage par vissage de l'écrou 430.

Selon un autre mode de réalisation non illustré, le câble 300 vient se positionner entre ledit corps 410 et l'écrou 430 à des fins de serrage.

Comme illustré, le boîtier 100 comprend sur sa surface supérieure une forme concave 130 pour accueillir le volume dudit module de liaison 400. Conformément à l'invention, de la partie basse de cette forme concave 130 se projette radialement une saillie 131 contre laquelle vient prendre appui le corps 410 du module de liaison 400.

Conformément à l'invention, ladite saillie 131 est dimensionnée de sorte que, si le boîtier 100 et/ou le câble 300 sont soumis à une contrainte trop importante, la saillie 131 casse et permet de désolidariser le module de liaison 400 du boîtier 100 autorisant son glissement selon la surface de la jante 200 sans interférer avec la fonction de bridage.

Pour simplifier le dispositif et selon le mode de réalisation non limitatif illustré, ce module de liaison 400 assure également la jonction des deux extrémités 330 et 340 du câble 300.

Selon un autre mode de réalisation non illustré, le corps du module de liaison est ménagé d'un alésage venant se positionner sur la saillie dudit boîtier.

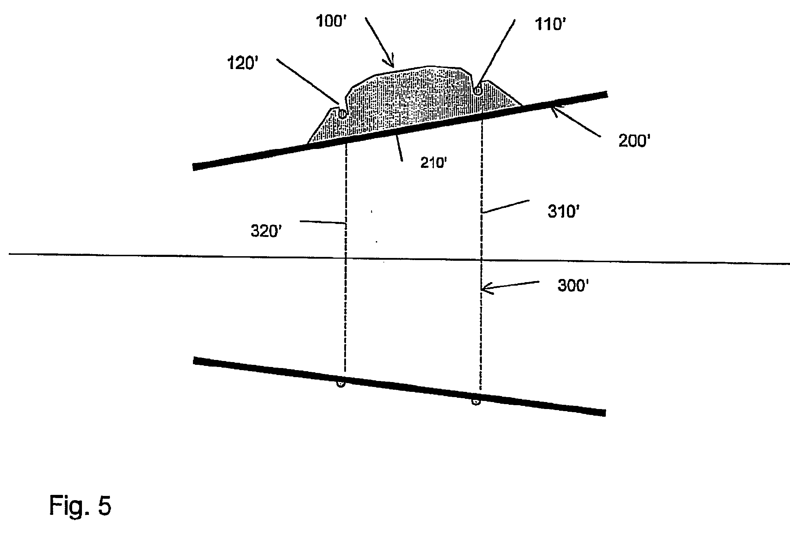

La figure 5 illustre les avantages du dispositif de bridage de l'invention exploité pour une fixation sur un profil de jante 200' conique tel celui qui peut se retrouver sur les jantes en aluminium. Il apparaît clairement que le bridage proposé par la mise en oeuvre de deux boucles d'un produit filaire tel le câble 300' permet de plaquer au mieux le boîtier 100' sur la surface conique 210' de jante 200' malgré la différence de diamètre du à la conicité. Un tel résultat technique ne peut être obtenu par un moyen de fixation par cerclage exploitant une bande de matériau dans les deux extrémités ne peuvent se réunir dans de bonnes conditions. Selon ce mode de réalisation ledit câble 300' vient brider ledit boîtier 100' au moyen de deux boucles 310' et 320' autour de jante 200', boucles venant appuyer contre la surface supérieure du boîtier 100, surface ménagée de deux rainures 110' et 120'.

On comprend que le dispositif de bridage et le boîtier, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

Ainsi par exemple, lors de l'installation, le câble est mis en tension (100 newtons environ) avec un outil de type tire-câble avant le blocage final du câble 300 dans le bloc 400. Cette mise en tension associée aux caractéristiques élastiques du câble permet d'obtenir le comportement d'évitement recherché.

Selon un autre mode de réalisation non illustré, le module de liaison 400 peut être directement moulé sur une terminaison du câble 300 et faire partie intégrante de ce dernier pour faciliter une application industrielle de l'invention.

## Revendications

1. Dispositif de bridage sur jante (200) d'un boîtier (100) électronique de mesure de la pression et/ou de la température à l'intérieur d'un pneumatique, **CARACTÉRISÉ PAR LE FAIT Qu'**il est constitué par au moins un câble (300) qui, faisant au moins un tour autour de la jante (200) et venant plaquer le boîtier (100) sur la surface (210) de la jante (200), forme de par son matériau, le nombre de fils qui le composé et leur torsion, une liaison élastique autorisant un déglacement axial du boîtier (100) sur la jante (2000) évitant ainsi au dit boîtier (100) de supporter la contrainte du pneumatique lors des phases montage et de démontage.

2. Dispositif selon la revendication 1, **CARACTÉRISÉ PAR LE FAIT QUE** ledit câble (300) fait deux tours autour de la jante (200) et vient s'associer aux deux bords longitudinaux du boîtier (100).

3. Dispositif selon la revendication 1, **CARACTÉRISÉ PAR LE FAIT QUE** la ou les boucles (310 et 320) du câble (300) viennent prendre appui sur la partie supérieure dudit boîtier (100).

4. Dispositif selon la revendicàtion 1, **CARACTÉRISÉ PAR LE FAIT QU'**il comporte un module de liaison (400) qui assure la fixation, du boîtier (100) sur le câble (300) et la liaison des deux extrémités (310 et 320) du câble (300).

5. dispositif selon la revendication 1, **CARACTÉRISÉ PAR LE FAIT QU'**il comporte un module de liaison (400) qui assure la fixation du boitier (100) sur le câble (300), fixation aménagée pour tendre vers une rupture libérante le glissement du boîtier (100) sur le câble (300) à partir d'un certain seuil de contrainte.

6. Dispositif selon la revendication **CARACTÉRISÉ PAR LE FAIT QUE** ledit câble (300) est mis sous tension lors de son installation.

7. Boîtier (100) adapté au dispositif de bridage selon la revendication 1, **CARACTÉRISÉ PAR LE FAIT QUE** le corps du boîtier (100) épouse la forme de la jante (200) et est ménagé de deux rainures dans lesquelles s'enfilent la ou les boucles du câble (300).

8. Boîtier (100) adapté au dispositif de bridage selon la revendication 5, **CARACTéRISé PAR LE FAIT QU'**il comprend, sur sa surface extérieure, une forme concave (130) d'accueil dudit module de liaison d'où se projette une saillie radiale (131) sur laquelle vient s'appuyer ledit module de liaison (400) et qui est susceptible de cassera en cas de forte contrainte exercée sur le boîtier (100).

## Patentansprüche

1. Vorrichtung zur Befestigung auf der Felge (200) eines elektronischen Gehäuses (100) zur Messung des Drucks und/oder der Temperatur im Inneren eines Reifens, **dadurch gekennzeichnet, dass** sie mindestens ein Kabel (300) umfasst, das, indem es mindestens einmal um die Felge (200) verläuft und das Gehäuse (100) auf die Oberfläche (210) der Felge (200) drückt, durch sein Material, die Anzahl der Drähte, aus denen es besteht, und ihre Verdrehung eine elastische Verbindung bildet, die eine axiale Verschiebung des Gehäuses (100) auf der Felge (200) ermöglicht und so verhindert, dass das Gehäuse (100) der Spannung des Reifens während der Phase des Montierens und des Abmontierens ausgesetzt ist.

2. Vorrichtung nach Anspruch 1, **dadurch gekennzeichnet, dass** das Kabel (300) zweimal um die Felge (200) verläuft und sich mit den zwei länglichen Rändern des Gehäuses (100) verbindet.

3. Vorrichtung nach Anspruch 1, **dadurch gekennzeichnet, dass** die Schlinge/die Schlingen (310 und 320) des Kabels (300) auf dem oberen Teil des Gehäuses (100) aufliegen.

4. Vorrichtung nach Anspruch 1, **dadurch gekennzeichnet, dass** sie ein Verbindungsmodul (400) umfasst, das die Befestigung des Gehäuses (100) auf dem Kabel (300) und die Verbindung der zwei Enden (310 und 320) des Kabels (300) sicherstellt.

5. Vorrichtung nach Anspruch 1, **dadurch gekennzeichnet, dass** sie ein Verbindungsmodul (400) umfasst, das die Befestigung des Gehäuses (100) auf dem Kabel (300) sicherstellt, wobei die Befestigung ausgelegt ist, um zu einem Bruch zu neigen, der das Gleiten des Gehäuses (100) auf dem Kabel (300) ab einer bestimmten Spannungsschwelle freisetzt.

6. Vorrichtung nach Anspruch 1, **dadurch gekennzeichnet, dass** das Kabel (300) bei seiner Installation unter Spannung gesetzt wird.

7. Gehäuse (100), das an die Vorrichtung zur Befestigung nach Anspruch 1 angepasst ist, **dadurch gekennzeichnet, dass** der Körper des Gehäuses (100) die Form der Felge (200) annimmt und mit zwei Nuten ausgestattet ist, in die die Schlinge/die Schlingen des Kabels (300) eingeführt werden.

8. Gehäuse (100), das an die Vorrichtung zur Befestigung nach Anspruch 5 angepasst ist, **dadurch gekennzeichnet, dass** es auf seiner äußeren Seite eine konkave Form (130) zur Aufnahme des Verbindungsmoduls umfasst, aus der ein radialer Vorsprung (131) herausragt, auf dem das Verbindungsmodul (400) aufliegt, und das im Fall einer starken Spannung, die auf das Gehäuse (100) ausgeübt wird, brechen kann.

## Claims

1. Device for clamping an electronic pressure and/or temperature measurement housing (100) onto a rim (200) inside of a tire, **characterized in that** it consists of at least one cable (300) which, making at least one turn around the rim (200), and urging the housing (100) against the surface (210) of the rim (200), forms by reason of the material thereof, the number of wires comprising same and the twisting thereof, a resilient connection allowing axial movement of the housing (100) on the rim (200) and thereby preventing said housing (100) from bearing the stress of the tire during the mounting and removal stages.

2. Device according to claim 1, **characterized in that** said cable (300) goes around the rim (200) twice and is connected to the two longitudinal edges of the housing (100) .

3. Device according to claim 1, **characterized in that** the loop or loops (310 and 320) of the cable (300) come to bear against the upper portion of said housing (100) .

4. Device according to claim 1, **characterized in that** it comprises a connection module (400) which ensures the attachment of the housing (100) to the cable (300) and the connection of the two ends (310 and 320) of the cable (300).

5. Device according to claim 1, **characterized in that** it comprises a connection module (400) which ensures the attachment of the housing (100) to the cable (300), an attachment which, starting from a certain stress threshold, is designed to tend towards breakage, thereby releasing the housing to slide (100) on the cable (300).

6. Device according to claim 1, **characterized in that** said cable (300) is tensioned during the use thereof .

7. Housing (100) adapted to the clamping device according to claim 1, **characterized in that** the body of the housing (100) matches the shape of the rim (200) and is provided with two grooves into which the loop or loops of the cable (300) are threaded.

8. Housing (100) adapted to the clamping device according to claim 5, **characterized in that** it includes a concave shape (130) on the outer surface thereof for accommodating said connection module, from which a radial projection (131) projects, on which said connection module (400) comes to bear, and which is capable of breaking in the event that a high degree of stress is exerted on the housing (100).
